# EUROPÄISCHE PATENTSCHRIFT

(11) **EP 3 038 871 B1**
(45) Veröffentlichungstag und Bekanntmachung des Hinweises auf die Patenterteilung: **18.10.2017**
(21) Anmeldenummer: 14758118.5
(22) Anmeldetag: 28.08.2014
(51) Int. Cl.: B60T 17/00, B60T 17/08, B60T 17/04

(54) **DRUCKLUFTBETÄTIGTER BREMSZYLINDER MIT ABGEDECKTER BE- UND ENTLÜFTUNGSBOHRUNG**
BRAKE CYLINDER WHICH IS ACTUATED BY MEANS OF COMPRESSED AIR AND WHICH COMPRISES A COVERED BORE FOR SUPPLYING AND REMOVING AIR
CYLINDRE DE FREIN ACTIONNÉ PAR AIR COMPRIMÉ, PRÉSENTANT UN TROU DE VENTILATION DOUBLE FLUX RECOUVERT

(30) Priorität: 30.08.2013 DE 102013014449
(43) Veröffentlichungstag der Anmeldung: 06.07.2016
(73) Patentinhaber: KNORR-BREMSE Systeme für Nutzfahrzeuge GmbH, 80809 München (DE)
(72) Erfinder: HEMERY, Frank, F-14600 Honfleur (FR)
(86) Internationale Anmeldenummer: PCT/EP2014/068220
(87) Internationale Veröffentlichungsnummer: WO 2015/028535

(56) Entgegenhaltungen:
- WO-A1-2013/050329
- DE-A1- 1 455 925
- DE-A1-102005 018 038
- DE-A1-102008 047 633
- US-A- 3 411 417

## Beschreibung

Die Erfindung geht aus von einem druckluftbetätigten Bremszylinder für Bremsanlagen von Fahrzeugen, welcher Folgendes aufweist:
- Wenigstens eine be- und entlüftbare Bremskammer, welche von einem beweglichen Bremskolben begrenzt ist,
- wenigstens zwei sich in einem Überlappungsbereich überlappende Wandungen des Bremszylinders, von denen eine Wandung eine mit ihrer Außenfläche mit der Umgebung in Kontakt stehende äußere Wandung und die andere Wandung eine innere Wandung ist, welche die äußere Wandung an deren nach innen weisenden Innenfläche zumindest abschnittsweise kontaktiert,
- wenigstens eine in dem Überlappungsbereich ausgebildete Bohrung, welche wenigstens die äußere Wandung als Durchgangsbohrung durchsetzt und mit der wenigstens einen Bremskammer in Strömungsverbindung steht, gemäß dem Oberbegriff von Anspruch 1.

Ein solcher Bremszylinder ist beispielsweise in DE 10 2008 047 633 A1 beschrieben und ist ein kombinierter Betriebsbrems- und Federspeicherbremszylinder, mit einem im Betriebsbremszylinder angeordneten, eine be- und entlüftbare Betriebsbremskammer begrenzenden Betriebsbremskolben sowie mit einem im Federspeicherbremszylinder angeordneten, durch wenigstens eine Speicherfeder betätigbaren, eine be- und entlüftbare Federspeicherbremskammer begrenzenden Federspeicherbremskolben mit einer Federspeicherbremskolbenstange, wobei die Federspeicherbremskolbenstange durch eine zentrale Kolbenstangenbohrung einer Zwischenwand zwischen dem Betriebsbremszylinder und dem Federspeicherbremszylinder derart ragt, dass sie auf den Betriebsbremskolben wirkt, und zwei Bohrungen vorgesehen sind, eine erste Bohrung und eine zweite Bohrung, wobei die Betriebsbremskammer über die erste Bohrung und die Federspeicherbremskammer über die zweite Bohrung be- und entlüftbar sind und beide Bohrungen in einem Überlappungsbereich der äußeren Gehäusewandung des Federspeicherbremszylinders mit einem demgegenüber inneren Flansch der Zwischenwand ausgebildet sind.

Die erste Bohrung der beiden Bohrungen dient daher dem Druckluftransport zum Be- und Entlüften der Betriebsbremskammer und die zweite Bohrung dem Druckluftransport zum Be- und Entlüften der Federspeicherbremskammer. Da die beiden Bohrungen in einem Überlappungsbereich angeordnet sind, in welchem die Wandung des Federspeicherbremszylinders den Flansch der Zwischenwand überlappt und die beiden Bohrungen mit einer gewissen Toleranz gefertigt werden, besteht die Gefahr, dass trotz wie beim Stand der Technik in beide Bohrungen eingeschraubter Einsätze zum Koppeln mit Druckluftleitungen Feuchtigkeit und Schmutz von außen in die Bohrungen eindringt und sich zwischen die Wandung des Federspeicherbremszylinders und den Flansch der Zwischenwand einlagert.

Ein gattungsgemäßer Bremszylinder wird in WO 2013/050329 A1 beschrieben.

Der vorliegenden Erfindung liegt demgegenüber die Aufgabe zugrunde, einen kombinierten Bremszylinder der eingangs erwähnten Art derart weiter zu entwickeln, dass er eine höhere Lebensdauer aufweist.

Diese Aufgabe wird erfindungsgemäß durch die Merkmale von Anspruch 1 gelöst.

### Offenbarung der Erfindung

### Die Erfindung sieht vor, dass

- eine wenigstens an der äußeren Wandung befestigte Abdeckung vorgesehen ist, welche sich komplett umlaufend radial über einen äußeren Bohrungsrand der wenigstens einen Bohrung hinauserstreckt und die Außenfläche der äußeren Wandung in komplett umlaufender Weise dichtend kontaktiert, wobei
- an der Abdeckung ein zumindest teilweise in die wenigstens eine Bohrung koaxial hineinragendes hülsenförmiges und zylindrisches Kupplungsteil ausgebildet ist, welches zum lösbaren Anschluss an ein Partner-Kupplungsteil vorgesehen ist, welches mit einer pneumatischen Leitung oder mit einem pneumatischen Rohr verbunden ist, wobei
- das Kupplungsteil wenigstens die äußere Wandung durchsetzt und mit der wenigstens einen Bremskammer in Verbindung steht.

Damit wird die wenigstens eine Bohrung von der Abdeckung schützend abgedeckt, so dass kein Wasser und Schmutz mehr zwischen die äußere Wandung und die innere Wandung vordringen kann, weil der Bohrungsrand von der Abdeckung in Umfangsrichtung gesehen vollständig und dichtend umgeben wird. Im Sinne einer vorteilhaften Doppelfunktion der Abdeckung ist an ihr zusätzlich das Kupplungsteil ausgebildet, welches ohnehin in der Bohrung benötigt wird, um ein Partner-Kupplungsteil lösbar anschließen zu können, welches mit einer Druckluftleitung verbunden ist. Damit sind in der Abdeckung die Funktionen "Abdichten" und "Ankuppeln der Druckluftleitung" vereinigt.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt weist die Abdeckung wenigstens ein in Umfangsrichtung umlaufendes Dichtelement auf, welches vermittels der durch die Befestigung der Abdeckung an der äußeren Wandung hervorgerufenen Axialkräfte gegen die Außenfläche der äußeren Wandung gepresst und dabei elastisch verformt wird. Das Dichtelement kann dann beispielsweise durch wenigstens eine mit der Abdeckung einstückige und in Umfangsrichtung umlaufende Dichtrippe gebildet werden oder durch einen an der Abdeckung gelagerten und in Umfangsrichtung umlaufenden Dichtungsring, beispielsweise aus Elastomer.

Wenn die Abdeckung vorzugsweise aus Aluminium gefertigt ist, dann hat sie einerseits die notwendige Steifigkeit und Materialhärte, dass mit Querkräften belastete Druckluftschläuche an ihr bzw. an dem in der Bohrung aufgenommenen Kupplungsteil angeschlossen werden können. Andererseits ist Aluminium weich genug, damit eine mit der Abdeckung beispielsweise einstückig angeformte und zur Außenfläche der äußeren Wandung weisende in Umfangsrichtung umlaufende Dichtrippe sich durch die von der Befestigung herrührenden Axialkräfte so verformt werden kann, dass die Kontaktlinie bzw- -fläche zwischen der Dichtrippe und der Außenfläche der äußeren Wandung dichtet. Alternativ könnte anstatt einer angeformten Dichrippe auch ein elastisches Dichtelement, z.B. ein Dichtungsring aus Elastomer in einer zur Außenfläche der äußeren Wandung weisenden Fläche der Abdeckung ausgebildeten umlaufenden Nut aufgenommen sein, welcher dann gegen diese Außenfläche dichtet.

Zusätzlich kann an einer radial äußeren Umfangsfläche des Kupplungsteils wenigstens ein gegenüber einer radial inneren Fläche der wenigstens einen Bohrung dichtendes Dichtelement vorgesehen sein, um zu verhindern, dass Schmutz und Feuchtigkeit ins Innere des Bremszylinders eindringen können.

Besonders bevorzugt ist auch das Kupplungsteil mit der Abdeckung einstückig ausgeführt, z.B. als Aluminiumdruckgussteil.

Besonders bevorzugt ist die Abdeckung an der äußeren Wandung mittels durch Schraubaugen der Abdeckung ragende Schrauben befestigt, die dann in Bohrungen in der äußeren Wandung durch Gewinde gekontert sind. Alternativ könnte die Abdeckung mit der äußeren Wandung auch mittels einer Rastung verrastet werden. Darüber hinaus sind beliebige Befestigungsmöglichkeiten denkbar, welche eine hinreichende Anpressung der Abdeckung an die äußere Fläche der äußeren Wandung gewährleisten.

Ganz besonders bevorzugt ist der Bremszylinder ein kombinierter Betriebsbrems- und Federspeicherbremszylinder, ein sog. Kombizylinder, mit einem im Betriebsbremszylinder angeordneten, eine be- und entlüftbare Betriebsbremskammer begrenzenden Betriebsbremskolben sowie mit einem im Federspeicherbremszylinder angeordneten, durch wenigstens eine Speicherfeder betätigbaren be- und entlüftbare Federspeicherbremskammer begrenzenden Federspeicherbremskolben mit einer Federspeicherbremskolbenstange, wobei die Federspeicherbremskolbenstange durch eine zentrale Kolbenstangenbohrung einer Zwischenwand zwischen dem Betriebsbremszylinder und dem Federspeicherbremszylinder derart ragt, dass sie auf den Betriebsbremskolben wirkt, und zwei Bohrungen vorgesehen sind, eine erste Bohrung und eine zweite Bohrung, wobei die Betriebsbremskammer über die erste Bohrung und die Federspeicherbremskammer über die zweite Bohrung be- und entlüftbar sind, und wobei ein Abschnitt der Gehäusewandung des Federspeichersbremszylinders die äußere Wandung und ein radial äußerer Flansch der Zwischenwand die innere Wandung bildet, und die Abdeckung zwei Kupplungsteile aufweist, von welchen ein erstes Kupplungsteil in die erste Bohrung und ein zweites Kupplungsteil in die zweite Bohrung hineinragt. In diesem Fall werden durch die Abdeckung beide Bohrungen des Kombizylinders abgedeckt bzw. abgedichtet.

Besonders bevorzugt ist dabei die erste Bohrung eine die Gehäusewandung des Federspeicherbremszylinders und den Flansch durchsetzende Durchgangsbohrung und die zweite Bohrung eine die Gehäusewandung des Federspeicherbremszylinders durchsetzende Durchgangsbohrung, die im Flansch als Sacklochbohrung fortgeführt ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Identische bzw. gleich wirkende Bauteile und Baugruppen sind in unterschiedlichen Ausführungsformen jeweils mit denselben Bezugszahlen bezeichnet.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine Querschnittsdarstellung eines kombinierten Betriebsbrems- und Federspeicherbremszylinders gemäß einer bevorzugten Ausführungsform der Erfindung;
- Fig.2: eine Teilschnittdarstellung des kombinierten Betriebsbrems- und Federspeicherbremszylinders von Fig.1 in einem Überlappungsbereich des Federspeicherbremszylinders mit einem Flansch einer Zwischenwand, wobei in dem Überlappungsbereich eine Abdeckung für Be- und Entlüftungsbohrungen angeordnet ist;
- Fig.3: eine perspektivische Ansicht des kombinierten Betriebsbrems- und Federspeicherbremszylinders von Fig.1 mit der Abdeckung;
- Fig.4: eine isolierte Ansicht von oben auf die Abdeckung;
- Fig.5: eine isolierte Ansicht von unten auf die Abdeckung;
- Fig.6: einen Ausschnitt von Fig.2.

### Beschreibung des Ausführungsbeispiels

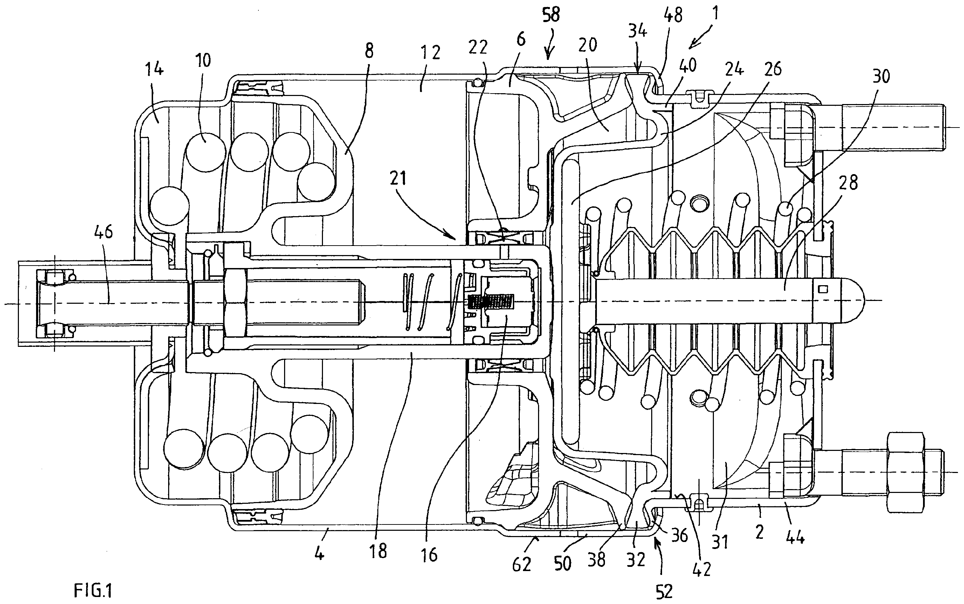

In Fig.1 ist ein kombinierter Betriebsbrems- und Federspeicherbremszylinder 1, nachfolgend Kombizylinder genannt, dargestellt. Der Kombizylinder 1 besteht aus einem Betriebsbremszylinder 2 und aus einem mit diesem baulich und funktionell verbundenen Federspeicherbremszylinder 4. Der Betriebsbremszylinder 2 und der Federspeicherbremszylinder 4 sind durch eine Zwischenwand 6 voneinander getrennt. Innerhalb des Federspeicherbremszylinders 4 ist ein Federspeicherbremskolben 8 verschiebbar angeordnet, wobei an einer Seite des Federspeicherbremskolbens 8 eine Speicherfeder 10 anliegt. Die Speicherfeder 10 stützt sich an ihrer entgegen gesetzten Seite am Boden des Federspeicherbremszylinders 4 ab. Zwischen dem Federspeicherbremskolben 8 und der Zwischenwand 6 ist eine Federspeicherbremskammer 12 ausgebildet, welche mit einem aus Maßstabsgründen nicht gezeigten Druckregelmodul in Verbindung steht, um diese zu belüften und zu entlüften. Bei Belüftung wird der Federspeicherbremskolben 8 unter Verspannung der Speicherfeder 10 axial in Lösestellung der Feststellbremse verschoben. Bei dieser Verschiebung des Federspeicherbremskolbens 8 wird die Luft, welche innerhalb der die Speicherfeder 10 aufnehmenden Federkammer 14 ansteht, über ein Entlüftungsventil 16 herausgedrückt. Wird dagegen zum Zwecke der Abbremsung die Federspeicherbremskammer 12 entlüftet, dann vermag die Speicherfeder 10 den Federspeicherbremskolben 8 in Zuspannstellung zu verschieben.

Der Federspeicherbremskolben 8 ist mit einer hohlen Federspeicherbremskolbenstange 18 verbunden, welche sich durch die Zwischenwand 6 in eine Betriebsbremskammer 20 des Betriebsbremszylinders 2 erstreckt. Eine in eine zentrale Bohrung 21 der Zwischenwand 6 eingesetzte Dichtungsanordnung 22 dichtet gegenüber der Außenwand der Federspeicherbremskolbenstange 18 während deren Längsbewegung ab. In die Betriebsbremskammer 20 mündet ein nicht gezeigter Einlass, über welchen zum Betätigen des Betriebsbremszylinders 2 Druckluft eingelassen und abgelassen wird. Die Druckluft wirkt auf eine innerhalb des Betriebsbremszylinders 2 eingesetzte Membrane 24 ein, an deren entgegen gesetzter Seite ein Druckstück in Form eines steifen Membrantellers 26 vorgesehen ist. Genauer trennt die Membrane 24 die mit Druckmittel be- und entlastbare Betriebsbremskammer 20 des Betriebsbremszylinders 2 von einer eine am Membranteller 26 abgestützte Rückholfeder 30 aufnehmende Federkammer 31.

Der Membranteller 26 ist mit einer Druckstange 28 verbunden, die mit einem Bremsbetätigungsmechanismus außerhalb des Kombizylinders 1 zusammenwirkt. Hierbei kann es sich beispielsweise um Betätigungselemente einer Scheibenbremse eines Kraftfahrzeugs handeln. Der Betriebsbremszylinder 2 ist ein aktiver Bremszylinder, d.h. dass die Betriebsbremse durch Belüften der Betriebsbremskammer 20 zugespannt und durch Entlüften gelöst wird. Die sich einerseits am Membranteller 26 und andererseits am Boden des Betriebsbremszylinders 2 abstützende Rückholfeder 30 sorgt dafür, dass die Druckstange 28 bei entlüfteter Betriebsbremskammer 20 in die Lösestellung zurückgeholt wird.

Ein radial äußerer Befestigungsrand 32 der Membrane 24 weist einen keilförmigen, sich nach radial innen hin verjüngenden Querschnitt auf. Dieser radial äußere Befestigungsrand 32 der Membrane 24 mit dem keilförmigen, sich nach radial innen verjüngenden Querschnitt ist in eine komplementär geformte Aufnahme 34 mit keilförmigem, sich nach radial außen erweiternden Querschnitt zwischen der Zwischenwand 6 und dem Betriebsbremszylinder 2 geklemmt. Die Zwischenwand 6 und der Betriebsbremszylinder 2 bilden ihre äußeren Ränder als nach radial außen abgebogene Flansche 36, 38 aus, deren gegeneinander weisende Innenflächen die Aufnahme 34 mit keilförmigem Querschnitt zwischen sich ausbilden.

Weiterhin ist an der Membrane 24 wenigstens ein sich in axialer Richtung erstreckender, in Bezug zum Befestigungsrand 32 nach radial innen versetzt angeordneter Zentrierring 40 ausgebildet, durch welchen sie gegen eine radial innere Umfangsfläche 42 einer Wandung 44 des Betriebsbremszylinders 2 zentrierbar ist. Besonders bevorzugt ist der Zentrierring 40 im Wesentlichen senkrecht zu einer Mittelebene des Befestigungsrandes 32 angeordnet und ragt beispielsweise einseitig von der Membrane 24 weg. Denkbar ist allerdings auch, dass anstatt dieses einen Zentrierrings 40 oder zusätzlich ein weiterer, in Richtung des Federspeicherbremszylinders 4 ragender und gegen die radial innere Umfangsfläche dessen Wandung 50 zentrierender Zentrierring vorgesehen ist.

Nicht zuletzt liegt die radial innere Umfangsfläche 42 des Betriebsbremszylinders 2, gegen welche der Zentrierring 40 zentriert, bevorzugt auf einem gedachten Zylinder, dessen Mittelachse koaxial zur Zylinderachse 46 ist. Der Zentrierring 40 kann wie gezeigt in Umfangsrichtung gesehen vollständig umlaufend oder aus Ringabschnitten bestehend ausgebildet sein. Die Membrane 24 ist bevorzugt aus Gummi gefertigt und der Zentrierring 40 mit ihr einstückig ausgebildet.

Dann sorgt eine eine axiale Komponente aufweisende Klemmkraft der gegeneinander geklemmten Zwischenwand 6 und Betriebsbremszylinder 2 dafür, dass der Zentrierring 40 der Membrane 24 gegen die radial innere Umfangsfläche 42 der Wandung 44 des Betriebsbremszylinders 2 gepresst wird. Mit anderen Worten sorgt die axiale Komponente der Klemmkraft dafür, dass der Befestigungsrand 32 aufgrund der Keilwirkung nach radial außen gezogen und dadurch der Zentrierring 40 mit höherer radialer Kraft gegen die radial innere Umfangsfläche 42 der Wandung 44 des Betriebsbremszylinders 2 im Sinne einer Selbstverstärkung der Zentrierung gepresst wird.

Realisierbar ist eine solche axiale Klemmkraftkomponente beispielsweise dadurch, dass der einen Flansch 36 ausbildende Rand des Betriebsbremszylinders 2 sowie der Flansch 38 der Zwischenwand 6 von einem Rand 48 der Wandung 50 des Federspeicherbremszylinders 4 durch eine Bördelung 52 übergriffen werden, welche beispielsweise durch einen Umformprozess hergestellt wird. Diese Bördelung 52 sorgt dann für die axiale Komponente der Klemmkraft.

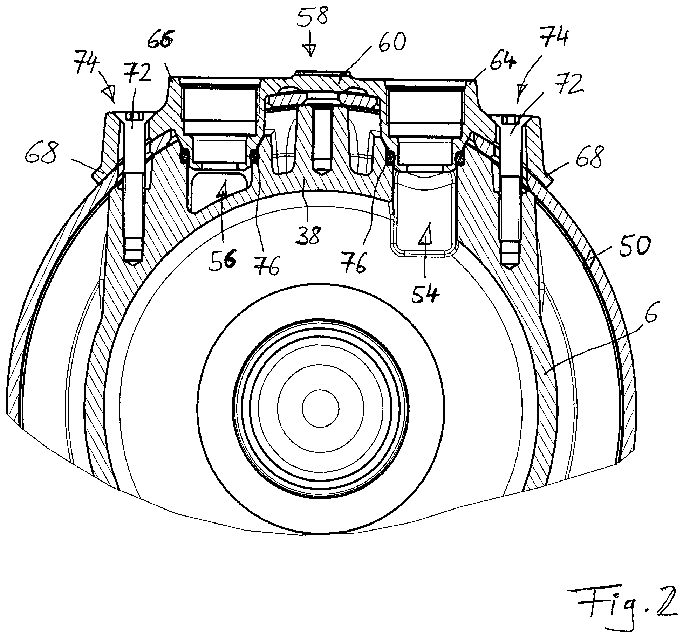

Weiterhin sind in dem Bereich, in dem sich die Wandung 50 des Federspeicherbremszylinders mit dem Flansch 38 der Zwischenwand 6 überlappt, beispielsweise zwei, zwar nicht in Fig.1 aber in Fig.2 sichtbare Bohrungen 54, 56 vorgesehen, welche sich beide wenigstens durch die Wandung 50 des Federspeicherbremszylinders 4 hindurcherstrecken.

Wie insbesondere aus Fig.2 hervorgeht, erstreckt sich eine erste Bohrung 54 dabei durch den Flansch 38 der Zwischenwand 6 hindurch, während eine zweite Bohrung 56 als Sacklochbohrung zwar bis den Flansch 38 der Zwischenwand 6 hineinragt, dann aber in einen im Flansch 38 ausgebildeten und in Fig.2 nicht sichtbaren Querkanal einmündet, welcher mit der Federspeicherbremskammer 12 in Verbindung steht. Die erste Bohrung durchsetzt indes den Flansch 38 der Zwischenwand 6 und mündet direkt in die Betriebsbremskammer 20. Die erste Bohrung 54 dient daher dem Druckluftransport zum Be- und Entlüften der Betriebsbremskammer 20 und die zweite Bohrung 56 dem Druckluftransport zum Be- und Entlüften der Federspeicherbremskammer 12.

Da die beiden Bohrungen 54, 56 in einem Überlappungsbereich 58 angeordnet sind, in welchem die Wandung 50 des Federspeicherbremszylinders 4 den Flansch 38 der Zwischenwand 6 überlappt und die beiden Bohrungen 54, 56 mit einer gewissen Toleranz gefertigt werden, besteht die Gefahr, dass trotz beispielsweise wie beim Stand der Technik in beide Bohrungen 54, 56 eingeschraubter Einsätze zum Koppeln mit Druckluftleitungen Feuchtigkeit und Schmutz von außen in die Bohrungen 54, 56 eindringt und sich dann zwischen die Wandung 50 des Federspeicherbremszylinders 4 und den Flansch 38 der Zwischenwand 6 einlagert.

Um dies zu vermeiden, ist eine an der Wandung 50 des Federspeicherbremszylinders 4 befestigte Abdeckung 60 vorgesehen ist, welche sich komplett umlaufend radial über die Bohrungsränder der beiden Bohrungen 54, 56 hinauserstreckt und eine Außenfläche 62 der Wandung 50 des Federspeicherbremszylinders 4 in vollständig umlaufender Weise dichtend kontaktiert.

Dabei sind an der Abdeckung 60 zumindest teilweise in die Bohrungen 54, 56 koaxial hineinragende hülsenförmige und zylindrische Kupplungsteile 64, 66 ausgebildet, ein erstes Kupplungsteil 64 und ein zweites Kupplungsteil 66, welche jeweils zum lösbaren Anschluss an ein hier nicht gezeigtes Partner-Kupplungsteil vorgesehen sind. Die Partner-Kupplungsteile sind jeweils mit einer Druckluftleitung oder mit einem pneumatischen Rohr verbunden. Mit anderen Worten werden die beiden Kupplungsteile 64, 66 mit ihren zugeordneten Partner-Kupplungsteilen lösbar verbunden, um über die Kupplungsteile 64, 66 Druckluft in und aus den beiden Bohrungen 54, 56 zu leiten und um einerseits die Betriebsbremskammer 20 und andererseits die Federspeicherbremskammer 12 zu be- und entlüften. Dabei ragt das erste Kupplungsteil 64 in die erste Bohrung 54 und das zweite Kupplungsteil 66 in die zweite Bohrung 56 koaxial hinein. Besonders bevorzugt sind die Kupplungsteile 64, 66 mit der Abdeckung 60 einstückig ausgeführt, z.B. als ein einziges Aluminiumdruckgussteil.

Beiden Kupplungsteile 64, 66 durchsetzen bevorzugt die Wandung 50 des Federspeicherbremszylinders 4 vollständig und münden in nicht von den Kupplungsteilen 64, 66 erfassten Axialabschnitten der Bohrungen 54, 56 im Flansch 38 der Zwischenwand 6. Damit steht das erste Kupplungsteil 64 mit der Betriebsbremskammer 20 und das zweite Kupplungsteil 66 mit der Federspeicherbremskammer 12 in Strömungsverbindung, so dass beide Kammern 12, 20 über die Kupplungsteile 64, 66 bzw. durch die diese aufnehmenden Bohrungen 54, 56 be- und entlüftet werden.

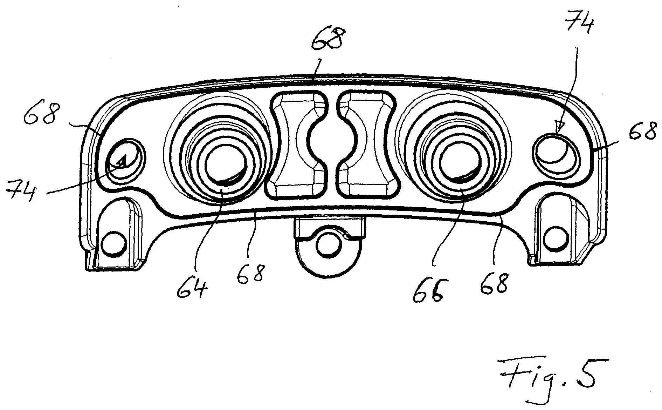

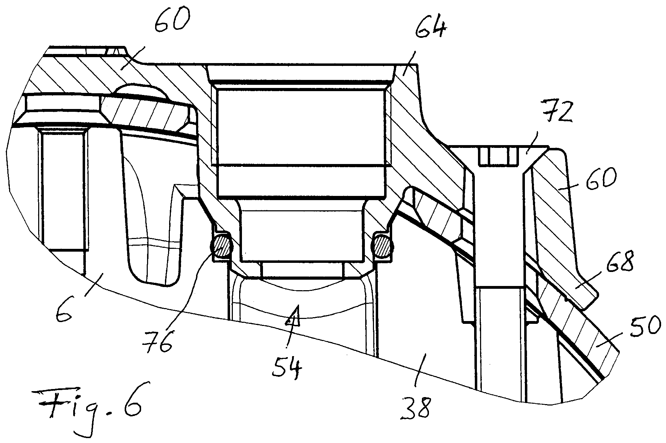

Wie insbesondere aus Fig.5 hervorgeht, weist die Abdeckung 60 bevorzugt ein in Umfangsrichtung umlaufendes Dichtelement 68 auf, welches vermittels der durch die Befestigung der Abdeckung 60 an der Wandung 50 des Federspeicherbremszylinders 4 hervorgerufenen Axialkräfte gegen die Außenfläche 62 der Wandung 50 des Federspeicherbremszylinders 4 gepresst und dabei elastisch verformt wird (Fig.6). Das Dichtelement 68 wird beispielsweise durch eine mit der Abdeckung 60 einstückige und in Umfangsrichtung bevorzugt am Außenumfang der Abdeckung 60 umlaufende Dichtrippe gebildet, welche zur Außenfläche 62 der Wandung 50 des Federspeicherbremszylinders 4 weist.

Die Abdeckung 60 ist vorzugsweise aus Aluminium gefertigt, z.B. als Aluminiumdruckgussteil. Dann hat sie einerseits die notwendige Steifigkeit und Materialhärte, dass mit Querkräften belastete Druckluftschläuche an ihr bzw. an den in den Bohrungen 54, 56 aufgenommenen Kupplungsteilen 64, 66 angeschlossen werden können. Andererseits ist Aluminium weich genug, damit die mit der Abdeckung 60 beispielsweise einstückig angeformte und zur Außenfläche 62 der Wandung 50 des Federspeicherbremszylinders 4 weisende und in Umfangsrichtung umlaufende Dichtrippe 68 sich durch die von der Befestigung (z.B. durch Schrauben 72) herrührenden Axialkräfte insbesondere in Querrichtung so verformt werden kann, dass die Kontaktlinie bzw- -fläche zwischen der Dichtrippe 68 und der Außenfläche 62 der Wandung 50 des Federspeicherbremszylinders 4 dichtet, wie Fig.6 zeigt. Diese Dichtrippe 68 ist dann bevorzugt am Außenumfang der Abdeckung 60 angeordnet (Fig.5, Fig.6).

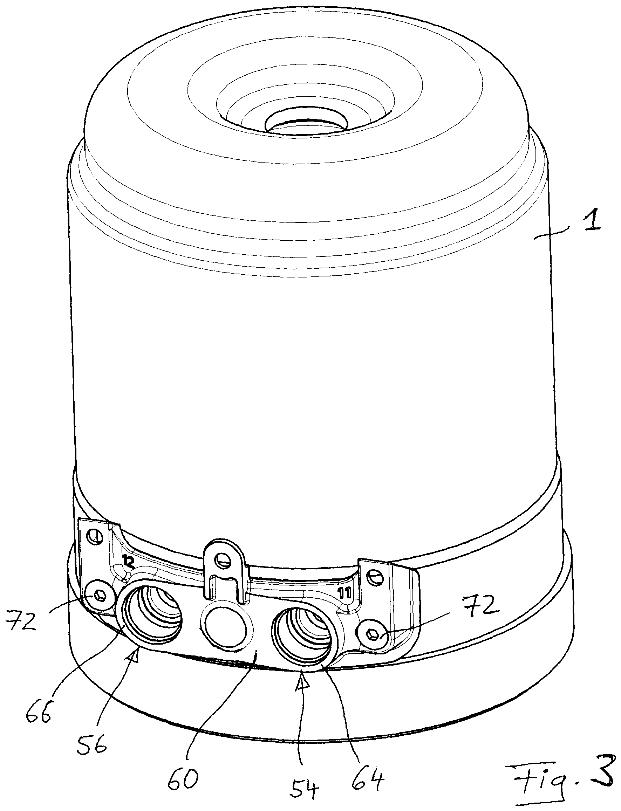

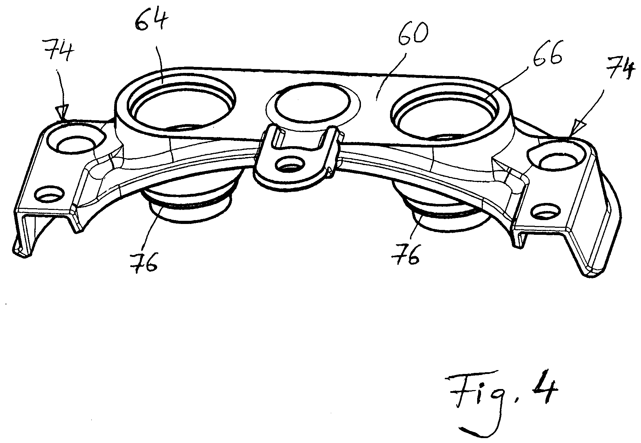

Bevorzugt ist die Abdeckung 60 an der Wandung 50 des Federspeicherbremszylinders 4 mittels durch Schraubaugen 74 der Abdeckung 60 ragende Schrauben 72 befestigt, die dann in Bohrungen in der Wandung 50 des Federspeicherbremszylinders 4 bzw. in dem Flansch 38 der Zwischenwand 6 durch Gewinde gekontert sind. Der Kombizylinder 1 mit an ihm befestigter Abdeckung 60 ist dann in Perspektive in Fig.3 gezeigt. Bevorzugt umgibt oder umschlingt die Dichtrippe 68 die Schraubaugen (Fig.4), damit auf diesem Wege keine Feuchtigkeit oder Schmutz von außen in die Bohrungen 54, 56 eindringen kann.

Zusätzlich ist bevorzugt jeweils an einer radial äußeren Umfangsfläche der Kupplungsteile 64, 66 ein gegenüber der radial inneren Fläche der betreffenden Bohrung 54, 56 dichtendes Dichtelement 76 vorgesehen sein, um zu verhindern, dass Schmutz und Feuchtigkeit ins Innere des Kombizylinders 1 eindringen können. Dieses Dichtelement 76 besteht jeweils bevorzugt in einem in einer radial äußeren Nut des betreffenden Kupplungsteils 64, 66 aufgenommenen Dichtring aus Elastomer, wie aus Fig.4 hervorgeht.

### Bezugszeichenliste

- 1: Betriebsbrems- und Federspeicher
- 2: Betriebsbremszylinder
- 4: Federspeicherbremszylinder
- 6: Zwischenwand
- 8: Federspeicherbremskolben
- 10: Speicherfeder
- 12: Federspeicherbremskammer
- 14: Federkammer
- 16: Entlüftungsventil
- 18: Federspeicherbremskolbenstange
- 20: Betriebsbremskammer
- 21: Bohrung
- 22: Dichtungsanordnung
- 24: Membrane
- 26: Membranteller
- 28: Druckstange
- 30: Rückholfeder
- 31: Federkammer
- 32: Befestigungsrand
- 34: Aufnahme
- 36: Flansch
- 38: Flansch
- 40: Zentrierring
- 42: radial innere Umfangsfläche
- 44: Wandung
- 46: Zylinderachse
- 48: Rand
- 50: Wandung
- 52: Bördelung
- 54: erste Bohrung
- 56: zweite Bohrung
- 58: Überlappungsbereich
- 60: Abdeckung
- 62: Außenfläche
- 64: erstes Kupplungsteil
- 66: zweites Kupplungsteil
- 68: Dichtrippe
- 72: Schrauben
- 74: Schraubaugen
- 76: Dichtelement

## Patentansprüche

1. Druckluftbetätigter Bremszylinder (1) für Bremsanlagen von Fahrzeugen, welcher Folgendes aufweist:
a) Wenigstens eine be- und entlüftbare Bremskammer (12, 20), welche von einem beweglichen Bremskolben bzw. Bremsmembrane (8, 24) begrenzt ist,
b) wenigstens zwei sich in einem Überlappungsbereich (58) überlappende Wandungen (38, 50) des Bremszylinders (1), von denen eine Wandung (50) eine mit ihrer Außenfläche (62) mit der Umgebung in Kontakt stehende äußere Wandung und die andere Wandung (38) eine innere Wandung ist, welche die äußere Wandung (50) an deren nach innen weisenden Innenfläche zumindest abschnittsweise kontaktiert,
c) wenigstens eine in dem Überlappungsbereich (58) ausgebildete Bohrung (54, 56), welche wenigstens die äußere Wandung (50) als Durchgangsbohrung durchsetzt und mit der wenigstens einen Bremskammer (12, 20) in Strömungsverbindung steht,
**dadurch gekennzeichnet, dass**
d) eine wenigstens an der äußeren Wandung (50) befestigte Abdeckung (60) vorgesehen ist, welche sich komplett umlaufend radial über einen äußeren Bohrungsrand der wenigstens einen Bohrung (54, 56) hinauserstreckt und die Außenfläche (62) der äußeren Wandung (50) in komplett umlaufender Weise dichtend kontaktiert, wobei
e) an der Abdeckung (60) ein zumindest teilweise in die wenigstens eine Bohrung (54, 56) koaxial hineinragendes hülsenförmiges und zylindrisches Kupplungsteil (64, 66) ausgebildet ist, welches zum lösbaren Anschluss an ein Partner-Kupplungsteil vorgesehen ist, welches mit einer pneumatischen Leitung oder mit einem pneumatischen Rohr verbunden ist, wobei
f) das Kupplungsteil (64, 66) wenigstens die äußere Wandung (50) durchsetzt und mit der wenigstens einen Bremskammer (12, 20) in Strömungsverbindung steht.

2. Druckluftbetätigter Bremszylinder nach Anspruch 1, **dadurch gekennzeichnet, dass** die Abdeckung (60) wenigstens eine in Umfangsrichtung umlaufendes Dichtelement (68) aufweist, welches vermittels der durch die Befestigung der Abdeckung (60) an der äußeren Wandung (50) hervorgerufenen Axialkräfte gegen die Außenfläche (62) der äußeren Wandung (50) gepresst und dabei elastisch verformt wird.

3. Druckluftbetätigter Bremszylinder nach Anspruch 2, **dadurch gekennzeichnet, dass** das Dichtelement (68) durch wenigstens eine mit der Abdeckung einstückige und in Umfangsrichtung umlaufende Dichtrippe oder durch einen an der Abdeckung (60) gelagerten und in Umfangsrichtung umlaufenden Dichtungsring gebildet wird.

4. Druckluftbetätigter Bremszylinder nach einem der vorhergehenden Ansprüche, **dadurch gekennzeichnet, dass** an einer radial äußeren Umfangsfläche des Kupplungsteils (64, 66) wenigstens ein gegenüber einer radial inneren Fläche der wenigstens einen Bohrung (54, 56) dichtendes Dichtelement (76) vorgesehen ist.

5. Druckluftbetätigter Bremszylinder nach einem der vorhergehenden Ansprüche, **dadurch gekennzeichnet, dass** das Kupplungsteil (64, 66) mit der Abdeckung (60) einstückig ausgeführt ist.

6. Druckluftbetätigter Bremszylinder nach einem der vorhergehenden Ansprüche, **dadurch gekennzeichnet, dass** die Abdeckung (60) aus Aluminium gefertigt ist.

7. Druckluftbetätigter Bremszylinder nach einem der vorhergehenden Ansprüche, **dadurch gekennzeichnet, dass** die Abdeckung (60) wenigstens an der äußeren Wandung (50) mittels durch Schraubaugen (74) der Abdeckung (60) ragende Schrauben (72) befestigt ist.

8. Druckluftbetätigter Bremszylinder nach einem der vorhergehenden Ansprüche, **dadurch gekennzeichnet, dass** er ein kombinierter Betriebsbrems- und Federspeicherbremszylinder (1) ist, mit
a) einem im Betriebsbremszylinder (2) angeordneten, eine be- und entlüftbare Betriebsbremskammer (20) begrenzenden Betriebsbremskolben (26) sowie
b) mit einem im Federspeicherbremszylinder (4) angeordneten, durch wenigstens eine Speicherfeder (10) betätigbaren be- und entlüftbare Federspeicherbremskammer (12) begrenzenden Federspeicherbremskolben (8) mit einer Federspeicherbremskolbenstange (18), wobei
c) die Federspeicherbremskolbenstange (18) durch eine zentrale Kolbenstangenbohrung (21) einer Zwischenwand (6) zwischen dem Betriebsbremszylinder (2) und dem Federspeicherbremszylinder (4) derart ragt, dass sie auf den Betriebsbremskolben (26) wirkt, und
d) zwei Bohrungen (54, 56) vorgesehen sind, eine erste Bohrung (54) und eine zweite Bohrung (56), wobei die Betriebsbremskammer (20) über die erste Bohrung (54) und die Federspeicherbremskammer (12) über die zweite Bohrung (56) be- und entlüftbar sind, wobei
e) ein Abschnitt der Wandung (50) des Federspeichersbremszylinders (4) die äußere Wandung und ein radial äußerer Flansch (38) der Zwischenwand (6) die innere Wandung bildet, und
f) die Abdeckung (60) zwei Kupplungsteile (64, 66) aufweist, von welchen ein erstes Kupplungsteil (64) in die erste Bohrung (54) und ein zweites Kupplungsteil (66) in die zweite Bohrung (56) hineinragt.

9. Druckluftbetätigter Bremszylinder nach Anspruch 8, **dadurch gekennzeichnet, dass** die erste Bohrung (54) eine die Wandung (50) des Federspeicherbremszylinders (4) und den Flansch (38) durchsetzende Durchgangsbohrung und die zweite Bohrung (56) eine die Wandung (50) des Federspeicherbremszylinders (4) durchsetzende Durchgangsbohrung ist, die in dem Flansch (38) als Sacklochbohrung fortgeführt ist.

## Claims

1. A brake cylinder (1) which is actuated by means of compressed air for brake systems of vehicles, which brake cylinder (1) has the following:
a) at least one brake chamber (12, 20) which can be aerated and ventilated and is delimited by a movable brake piston or brake diaphragm (8, 24),
b) at least two walls (38, 50) of the brake cylinder (1) which overlap one another in an overlapping region (58) and of which one wall (50) is an outer wall which is in contact by way of its outer face (62) with the surroundings and the other wall (38) is an inner wall which makes contact at least in sections with the outer wall (50) on its inwardly pointing inner face,
c) at least one bore (54, 56) which is configured in the overlapping region (58), penetrates at least the outer wall (50) as a through bore, and is flow-connected to the at least one brake chamber (12, 20),
**characterized in that**
d) a cover (60) which is fastened at least to the outer wall (50) is provided, which cover (60) extends in a completely circumferential manner radially beyond an outer bore edge of the at least one bore (54, 56) and makes sealing contact with the outer face (62) of the outer wall (50) in a completely circumferential way,
e) a sleeve-shaped and cylindrical coupling part (64, 66) which protrudes coaxially at least partially into the at least one bore (54, 56) being configured on the cover (60), which coupling part (64, 66) is provided for releasable connection to a partner coupling part which is connected to a pneumatic line or to a pneumatic tube,
f) the coupling part (64, 66) penetrating at least the outer wall (50) and being flow-connected to the at least one brake chamber (12, 20).

2. The brake cylinder which is actuated by means of compressed air as claimed in claim 1, **characterized in that** the cover (60) has at least one sealing element (68) which runs around in the circumferential direction and is pressed against the outer face (62) of the outer wall (50) and is deformed elastically in the process by means of the axial forces which are caused by way of the fastening of the cover (60) to the outer wall (50).

3. The brake cylinder which is actuated by means of compressed air as claimed in claim 2, **characterized in that** the sealing element (68) is formed by at least one sealing rib which is in one piece with the cover and runs around in the circumferential direction, or by a sealing ring which is mounted on the cover (60) and runs around in the circumferential direction.

4. The brake cylinder which is actuated by means of compressed air as claimed in one of the preceding claims, **characterized in that** at least one sealing element (76) which seals with respect to a radially inner face of the at least one bore (54, 56) is provided on a radially outer circumferential face of the coupling part (64, 66).

5. The brake cylinder which is actuated by means of compressed air as claimed in one of the preceding claims, **characterized in that** the coupling part (64, 66) is configured in one piece with the cover (60).

6. The brake cylinder which is actuated by means of compressed air as claimed in one of the preceding claims, **characterized in that** the cover (60) is manufactured from aluminum.

7. The brake cylinder which is actuated by means of compressed air as claimed in one of the preceding claims, **characterized in that** the cover (60) is fastened at least to the outer wall (50) by means of screws (72) which protrude through screw eyes (74) of the cover (60).

8. The brake cylinder which is actuated by means of compressed air as claimed in one of the preceding claims, **characterized in that** it is a combined service brake and spring brake cylinder (1), having
a) a service brake piston (26) which is arranged in the service brake cylinder (2) and delimits a service brake chamber (20) which can be aerated and ventilated, and
b) having a spring brake piston (8) with a spring brake piston rod (18), which spring brake piston (8) is arranged in the spring brake cylinder (4) and delimits spring brake chambers (12) which can be aerated and ventilated, and can be actuated by way of at least one accumulator spring (10),
c) the spring brake piston rod (18) protruding through a central piston rod bore (21) of an intermediate wall (6) between the service brake cylinder (2) and the spring brake cylinder (4) in such a way that it acts on the service brake piston (26), and
d) two bores (54, 56) being provided, a first bore (54) and a second bore (56), it being possible for the service brake chamber (20) to be aerated and ventilated via the first bore (54) and for the spring brake chamber (12) to be aerated and ventilated via the second bore (56),
e) a section of the wall (50) of the spring brake cylinder (4) forming the outer wall, and a radially outer flange (38) of the intermediate wall (6) forming the inner wall, and
f) the cover (60) having two coupling parts (64, 66), of which a first coupling part (64) protrudes into the first bore (54) and a second coupling part (66) protrudes into the second bore (56).

9. The brake cylinder which is actuated by means of compressed air as claimed in claim 8, **characterized in that** the first bore (54) is a through bore which penetrates the wall (50) of the spring brake cylinder (4) and the flange (38), and the second bore (56) is a through bore which penetrates the wall (50) of the spring brake cylinder (4) and is continued in the flange (38) as a blind bore.

## Revendications

1. Cylindre (1) de frein à actionnement par air comprimé pour des installations de freinage de véhicule, qui a ce qui suit :
a) au moins une chambre (12, 20) de frein, qui peut être alimentée en air et purgée d'air et qui est délimitée par un piston de frein mobile ou par une membrane (8, 24) de frein,
b) au moins deux parois (38, 50) du cylindre (1) de frein se recouvrant dans une région (58) de recouvrement, dont l'une (50) est une paroi extérieure en contact avec l'atmosphère par sa surface (62) extérieure et dont l'autre (38) est une paroi intérieure, qui est en contact, au moins par endroit, avec la paroi (50) extérieure sur sa surface intérieure tournée vers l'intérieur,
c) un trou (54, 56), qui est constitué dans la région (58) de recouvrement, qui, en tant que trou traversant, traverse au moins la paroi (50) extérieure et qui est en liaison d'écoulement avec la au moins une chambre (12, 20) de freinage,
**caractérisé en ce que**
d) il est prévu un recouvrement, qui est fixé au moins à la paroi (50) extérieure, qui s'étend complètement radialement en faisant le tour au-delà d'un bord extérieur du au moins un trou (54, 56) et qui est en contact avec étanchéité d'une manière faisant complètement le tour avec la surface (62) extérieure de la paroi (50) extérieure, dans lequel
e) sur le recouvrement (60), est constituée une partie (64, 66) d'accouplement en forme de manchon et cylindrique pénétrant coaxialement, au moins en partie, dans le au moins un trou (54, 56), partie (64, 66) d'accouplement qui est prévue, pour le raccordement amovible, à une partie d'accouplement partenaire, laquelle est reliée à un conduit pneumatique ou à un tuyau pneumatique, dans lequel
f) la partie (64,66) d'accouplement traverse au moins la paroi (50) extérieure et est en liaison d'écoulement avec la au moins une chambre (12, 20) de frein.

2. Cylindre de frein à actionnement par air comprimé suivant la revendication 1, **caractérisé en ce que** le recouvrement (60) a au moins un élément (68) d'étanchéité, qui fait le tour dans la direction périphérique et qui, au moyen des forces axiales provoquées par la fixation de recouvrement (60) à la paroi (50) extérieure, est pressé sur la surface (62) extérieure de la paroi (50) extérieure et est ainsi déformé élastiquement.

3. Cylindre de frein à actionnement par air comprimé suivant la revendication 2, **caractérisé en ce que** l'élément (68) d'étanchéité est formé par au moins une nervure d'étanchéité d'une seule pièce avec le recouvrement et faisant le tour dans la direction périphérique ou par une bague d'étanchéité montée sur le recouvrement (60) et faisant le tour dans la direction périphérique.

4. Cylindre de frein à actionnement par air comprimé suivant l'une des revendications précédentes, **caractérisé en ce qu'**il est prévu, sur une surface périphérique extérieure radialement de la partie (64, 66) d'accouplement, au moins un élément (76) d'étanchéité rendant étanche par rapport à une surface intérieure radialement du au moins un trou (54, 56).

5. Cylindre de frein à actionnement par air comprimé suivant l'une des revendications précédentes, **caractérisé en ce que** la partie (64, 66) d'accouplement est réalisée d'une seule pièce avec le recouvrement (60).

6. Cylindre de frein à actionnement par air comprimé suivant l'une des revendications précédentes, **caractérisé en ce que** le recouvrement (60) est en aluminium.

7. Cylindre de frein à actionnement par air comprimé suivant l'une des revendications précédentes, **caractérisé en ce que** le recouvrement (60) est fixé au moins à la paroi (50) extérieure à l'aide de vis (72) passant dans des trous de vissage du recouvrement (60).

8. Cylindre de frein à actionnement par air comprimé suivant l'une des revendications précédentes, **caractérisé en ce que** c'est un cylindre (1) de frein combiné de frein de service et à ressort accumulateur, comprenant
a) un piston (26) de frein de service disposé dans un cylindre (2) de frein de service et délimitant une chambre (20) de frein de service pouvant être alimentée en air et purgée d'air, ainsi que
b) un piston (8) de frein à ressort accumulateur disposé dans le cylindre (4) de frein à ressort accumulateur, pouvant être actionné par au moins un ressort (10) accumulateur, délimitant une chambre (12) de frein à ressort accumulateur pouvant être alimentée en air et purgée et ayant une tige (18) de piston de frein de ressort accumulateur, dans lequel
c) la tige (18) de piston de frein à ressort accumulateur pénètre par un trou (21) de tige de piston central d'une paroi (6) intermédiaire entre le cylindre (2) de frein de service et le cylindre (4) de frein à ressort accumulateur, de manière à agir sur le piston (26) de frein de service et
d) il est prévu deux trous (54, 56), un premier trou (54) et un deuxième trou (56), la chambre (20) de frein de service pouvant être alimentée en air et purgée d'air par le premier tour (54) et la chambre (12) de frein à ressort accumulateur par le deuxième trou (56), dans lequel
e) une partie de la paroi (50) du cylindre (4) de frein à ressort accumulateur forme la paroi extérieure et une bride (38) extérieure radialement de la paroi (6) intermédiaire la paroi intérieure et
f) le recouvrement (60) a deux parties (64, 66) d'accouplement, dont une première partie (64) d'accouplement pénètre dans le premier trou (54) et une deuxième partie (66) d'accouplement dans le deuxième trou (56).

9. Cylindre de frein à actionnement par air comprimé suivant la revendication 8, **caractérisé en ce que** le premier trou (54) est un trou traversant la paroi (50) du cylindre (4) de frein à ressort accumulateur et la bride (38) et le deuxième trou (56) est un trou traversant passant à travers la paroi (50) du cylindre (4) de frein à ressort accumulateur et se poursuivant dans la bride (38) sous la forme d'un trou borgne.
